# EUROPEAN PATENT APPLICATION

(11) **EP 3 882 694 A1**
(43) Date of publication of application: **22.09.2021**
(21) Application number: 20170179.4
(22) Date of filing: 17.04.2020
(51) Int. Cl.: G02F 1/167

(54) **COLOR FILTER IN A COLOR ELECTROPHORETIC DISPLAY ARRANGEMENT AND METHOD FOR MANUFACTURING THEREOF**

(30) Priority: 19.03.2020 EP 20164186
(71) Applicant: Plastic Logic HK Limited, Central Hong Kong (HK)
(72) Inventor: DOEBELT, Andreas, 01309 Dresden (DE)
(74) Representative: Lippert Stachow Patentanwälte Rechtsanwälte Partnerschaft mbB

(57) **Abstract**

The invention relates to a method for manufacturing an inkjet color filter (1) arranged on an electrophoretic display (2) and a color filter (1) comprising an electrophoretic display media (3) arranged on a backplane, executed by the steps of arranging an upper optical clear adhesive layer (8), arranging a top encapsulation film (9) and a color pattern (7) between the electrophoretic media (3) and the top encapsulation film (9) and avoids the problems of coating an image receiving layer onto the electrophoretic display media (3) especially an image reception liquid. This is solved by a method and a color filter wherein the upper optical clear adhesive layer (8) is applied before inkjet printing the color pattern (7) wherein the optical clear adhesive layer having the function of an image receiving layer. (Fig. 2)

## Description

The invention relates to a method for manufacturing a color filter in a color electrophoretic display arrangement. The color electrophoretic display arrangement comprises an electrophoretic display media arranged on a backplane, i.e. a substrate provided with a pixel driving array. The method involves the steps of arranging a top encapsulation film attached by an upper optical clear adhesive layer within the color electrophoretic display arrangement and arranging a color pattern between the electrophoretic display media and the top encapsulation film.

The invention also relates to a color electrophoretic display arrangement comprising an electrophoretic display media arranged on a backplane, i.e. a substrate provided with a pixel driving array, having a top encapsulation film attached by an upper optical clear adhesive layer within the color electrophoretic display arrangement and a color pattern between the electrophoretic display media and the top encapsulation film.

Summarizing, the invention relates to color filter manufacturing as part of assembly process of a flexible electrophoretic display arrangement. It can also get applied to color filter manufacturing as part of process of a rigid electrophoretic display arrangement or other kinds of displays using color filters.

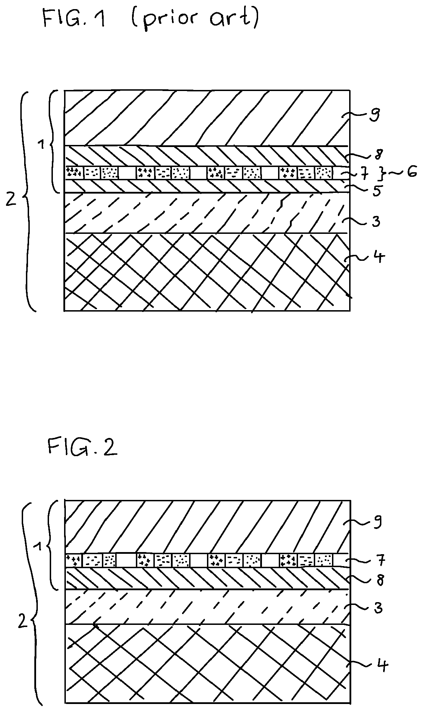

As shown in Fig. 1 (prior art), manufacturing a color filter 1 of an electrophoretic display arrangement 2 on top of an electrophoretic display media 3 whereas the electrophoretic display media 3 is arranged on a backplane 4 i.e. a substrate provided with a pixel driving array (not shown) involves process steps:
1. Depositing a lower optical clear adhesive layer 5 onto the electrophoretic display media 3;
2. laminating a color pattern layer 6, e.g. premanufactured by a photolithography process including a color pattern 7; attached by the lower optical clear adhesive layer 5
3. Depositing an upper optical clear adhesive layer 8 onto the color pattern layer 6; and
4. laminating a top encapsulation film 9 attached by the upper optical clear adhesive layer 8.

Other process technologies using liquid resin for optical bonding of the top encapsulation film 9, but this invention is applied for technology using the upper optical clear adhesive layer 8 for lamination of encapsulation film 9.

The basic idea of the invention is to use inkjet printing to produce the color pattern while reducing the manufacturing effort.

Generally, to perform inkjet printing on a surface, the surface must be receptive to the ink. To enable inkjet printing for the color pattern, an image receiving layer should have been applied to the surface of the electrophoretic display media.

The basic function of the ink receiving layer (also called IRL, image receiving layer, image receiving liquid, priming layer, etc.) is to ensure a good reception of ink droplets for precise placement and reduction of "coffee stain effect". Both are not easy to achieve by printing on the surface of the electrophoretic display, especially a pure PET, PEN or other flexible substrate material surfaces.

The ink receiving layer has usually an "instant solvent reception" property (for solvent ink) and influences the surface tension between ink and surface allowing a good reception of ink droplets. The process of creating the image receiving layer on top of electrophoretic display media is a "wet process". The image receiving layer material is diluted in solvent and coated to the electrophoretic display media as liquid. After the solvent is removed by following drying process the remaining image receiving layer material is a dry layer of polymers with good ink receiving properties with usually > 5 µm thickness.

The two process steps of wet coating of an ink receiving layer and drying process to remove solvents have impact on product, cost and manufacturing capacity:
- material cost;
- invest and operation cost of wet coating machine and drying machine;
- manpower resources for operation and maintenance;
- manufacturing capacity (two process steps);
- yield loss due to misprocessing;
- extra efforts on production environment (cleanness environment for wet coating process);
- material thickness of ink receiving layer increases total display product thickness; and
- possible reliability issues of (polymer) image receiving layer material (e.g. color change under UV or heat in real live product usage).

It is therefore the object of the invention to reduce the above disadvantages.

This problem is solved by a method as mentioned at the beginning according to the claim 1 wherein
the upper optical clear adhesive layer is deposited onto the electrophoretic display media;
the color pattern is inkjet-printed onto the upper optical clear adhesive layer wherein the upper optical clear adhesive layer is used as an ink receiving layer; and
the top encapsulation film is applied onto the color pattern wherein the adhesive properties of the upper optical clear adhesive layer are used throughout the color pattern attaching the top encapsulation film within the color electrophoretic display arrangement.

As a result of the invention, it has now been discovered that an optical clear adhesive layer has not only adhesive properties but also the property of an ink receiving layer.

Claims 2 to 6 show reasonable variations of the method according to the invention.

The method steps can be executed in the following order:
- applying the upper optical clear adhesive layer onto an surface of the electrophoretic display media opposite to the backplane;
- inkjet printing of the color pattern onto an surface of the upper optical clear adhesive layer opposite to the electrophoretic display media; and
- applying the top encapsulation film onto the surface of the upper optical clear adhesive layer provided with the color pattern.

The color pattern can be applied by an organic solvent based inkjet printing. Particularly, the color pattern can be applied by water based inkjet printing.

The upper optical clear adhesive layer can be applied by laminating.

Also the the top encapsulation film can be applied by laminating.

The problem of the invention is also solved by a color filter as mentioned at the beginning according to the claim 7, the upper optical clear adhesive layer is arranged on the electrophoretic display media;
the color pattern is inkjet-printed onto the upper optical clear adhesive layer; and
the top encapsulation film is attached onto the color pattern comprising upper optical clear adhesive layer.

Claim 8 shows a reasonable variation of the color filter according to the invention, wherein the layers can be arranged in the following order:
- the upper optical clear adhesive layer is applied onto an surface of the electrophoretic display media opposite to the backplane;
- the color pattern is inkjet printed onto an surface of the upper optical clear adhesive layer opposite to the electrophoretic display media; and
- the top encapsulation film is arranged onto the surface of the upper optical clear adhesive layer provided with the inkjet printed color pattern.

The technical advantage of the invention allows to apply inkjet-printing of the color pattern without applying a special ink receiving layer. These process steps are completely avoided from the process flow. Also the lamination of lower optical clear adhesive is not necessary anymore.

For the complete display construction the top encapsulation film is laminated to the electrophoretic display with an optical clear adhesive film anyway.

For this invention it was discovered that typical standard optical clear adhesive films, available commercially, have reasonable good ink reception properties. Therefore an additional image receiving layer is not required.

In the following, the invention is explained in more detail on the basis of an embodiment. In the associated drawings,
- Fig. 1: shows an electrophoretic display construction according to the prior art and
- Fig. 2: depicts an embodiment of the invention.

Fig. 1 as showing the prior was already discussed above.

The electrophoretic display arrangement 2 of Fig. 2 is provided with the color filter 1 according to the invention, and with the electrophoretic display media 3 arranged on the backplane 4.

To produce the color filter 1, the electrophoretic display arrangement 2 is provided with an upper optical clear adhesive layer 8 that adheres to the electrophoretic display media 3.

The color pattern 7 is inkjet-printed onto the upper optical clear adhesive layer 8 wherein the upper optical clear adhesive layer 8 is used as an ink receiving layer; and the top encapsulation film 9 is applied onto the color pattern 7 wherein the adhesive properties of the upper optical clear adhesive layer 8 are used throughout the color pattern 7 attaching the top encapsulation film 9 within the color electrophoretic display arrangement 2.

The layers can be arranged in the following order:
- the upper optical clear adhesive layer 8 is applied onto an surface of the electrophoretic display media 3 opposite to the backplane 4;
- the color pattern 7 is inkjet printed onto an surface of the upper optical clear adhesive layer 8 opposite to the electrophoretic display media 3; and
- the top encapsulation film 9 is arranged onto the surface of the upper optical clear adhesive layer 8 provided with the inkjet printed color pattern 7.

The upper optical clear adhesive film 8 acts as reception layer for solvent and water based inks ensuring accurate ink droplet placement and show no coffee stain effect in dried ink droplets. The basic process steps of creating color filter 1 on electrophoretic display media 3 are now reduced to:
1. Laminating upper optical clear adhesive layer 8 to electrophoretic display media 3;
2. Printing of color ink onto upper optical clear adhesive layer 8 by inkjet printing; and
3. Laminating top encapsulation film 9.

The color pigments from inkjet printing stay on the surface of the upper optical clear adhesive 8. Despite pigments covering portions of the area of the upper optical clear adhesive 8 the adhesion of the upper optical clear adhesive 8 towards the top encapsulation film 9 is still good enough to bond the top encapsulation film 9 firmly to the upper optical clear adhesive 8.

Standard optical clear adhesive material of different thickness can be used. For choosing the right thickness the parallaxe effect of color filter 1 on an electrophoretic display arrangement 2 must be considered. For example 170 µm square TFT pixel size with ∼80% of TFT area covered with color ink requires optical clear adhesive thickness of maximum ∼25µm to avoid parallaxe effect. For smaller TFT pixel size and/or higher color ink area within a TFT pixel area require thinner optical clear adhesive 8. As example typical commercially available optical clear adhesive 8 incorporated with this invention are 3M8171CL and 3M8171PCL.

### Reference signs

- 1: color filter
- 2: electrophoretic display arrangement
- 3: electrophoretic display media
- 4: backplane
- 5: lower optical clear adhesive layer
- 6: color pattern layer
- 7: color pattern
- 8: upper optical clear adhesive layer
- 9: top encapsulation film

## Claims

1. Method for manufacturing a color filter (1) in a color electrophoretic display arrangement (2), the color electrophoretic display arrangement (2) comprising an electrophoretic display media (3) arranged on a backplane (4), i.e. a substrate provided with a pixel driving array, involving the steps of
- arranging a top encapsulation film (9) attached by an upper optical clear adhesive layer (8) within the color electrophoretic display arrangement (2); and
- arranging a color pattern (7) between the electrophoretic display media (3) and the top encapsulation film (9);
**characterized in that**
the upper optical clear adhesive layer (8) is deposited onto the electrophoretic display media (3);
the color pattern (7) is inkjet-printed onto the upper optical clear adhesive layer (8) wherein the upper optical clear adhesive layer (8) is used as an ink receiving layer; and
the top encapsulation film (9) is applied onto the color pattern (7) wherein the adhesive properties of the upper optical clear adhesive layer (8) are used throughout the color pattern (7) attaching the top encapsulation film (9) within the color electrophoretic display arrangement (2).

2. Method of claim 1, **characterized in that** the steps are executed in the following order
- applying the upper optical clear adhesive layer (8) onto a surface of the electrophoretic display media (3) opposite to the backplane (4);
- inkjet printing of the color pattern (7) onto a surface of the upper optical clear adhesive layer (8) opposite to the electrophoretic display media (3); and
- applying the top encapsulation film (9) onto the surface of the upper optical clear adhesive layer (8) provided with the color pattern (7).

3. Method of claim 1 or 2, **characterized in that** the color pattern (7) is applied by a solvent based inkjet printing.

4. Method of claim 3, **characterized in that** the color pattern (7) is applied by water based inkjet printing.

5. Method of one of the claims 1 to 3, **characterized in that** the upper optical clear adhesive layer (8) is applied by lamination.

6. Method of one of the claims 1 to 4, **characterized in that** the top encapsulation film (9) is applied by laminating.

7. Color filter in a color electrophoretic display arrangement (2) whereas the electrophoretic display arrangement (2) comprises an electrophoretic display media (3) arranged on a backplane (4), i.e. a substrate provided with a pixel driving array, a top encapsulation film (9) attached by an upper optical clear adhesive layer (8) within the color electrophoretic display arrangement (2); and an color pattern (7) between the electrophoretic media (3) and the top encapsulation film (9);
**characterized in that**
the upper optical clear adhesive layer (8) is arranged on the electrophoretic display media (3);
the color pattern (7) is inkjet-printed onto the upper optical clear adhesive layer (8); and
the top encapsulation film (9) is attached onto the color pattern (7) comprising upper optical clear adhesive layer (8).

8. Color filter of claim 7, **characterized in that** the layers are arranged in the following order
- the upper optical clear adhesive layer (8) is applied onto an surface of the electrophoretic display media (3) opposite to the backplane (4);
- the color pattern (7) is inkjet printed onto an surface of the upper optical clear adhesive layer (8) opposite to the electrophoretic display media (3); and
- the top encapsulation film (9) is arranged onto the surface of the upper optical clear adhesive layer (8) provided with the inkjet printed color pattern (7).
